# FASCICULE DE BREVET EUROPEEN

(11) **EP 1 368 209 B1**
(45) Date de publication et mention de la délivrance du brevet: **27.05.2009**
(21) Numéro de dépôt: 02732455.7
(22) Date de dépôt: 04.03.2002
(51) Int. Cl.: B60K 15/00

(54) **SYSTEME DE SECURITE POUR RESERVOIR A CARBURANT LIQUIDE**
SICHERHEITSSYSTEM FÜR TANK FÜR FLÜSSIGEN KRAFTSTOFF
SAFETY SYSTEM FOR A LIQUID FUEL TANK

(30) Priorité: 07.03.2001 FR 0103192
(43) Date de publication de la demande: 10.12.2003
(73) Titulaire: Inergy Automotive Systems Research (SA), 1120 Bruxelles (BE)
(72) Inventeur: GANACHAUD, Patrick, F-53000 Laval (FR)
(74) Mandataire: Jacques, Philippe
(86) Numéro de dépôt international: PCT/EP2002/002358
(87) Numéro de publication internationale: WO 2002/072377

(56) Documents cités:
- EP-A- 0 921 026
- GB-A- 2 254 846
- US-A- 5 183 087
- US-A- 5 282 497
- US-A- 5 524 662

## Description

La présente invention concerne un système de sécurité pour réservoir à carburant liquide.

De nombreux systèmes de sécurité relatifs à des réservoirs à carburant ont été décrits et s'adressent généralement à la résolution des problèmes liés au dégazage du réservoir pendant son remplissage, ainsi que sa mise à l'air en période normale de repos et de fonctionnement du moteur consommant ce carburant. A ces problèmes s'ajoute la nécessité de plus en plus impérieuse, en vue du respect de l'environnement, de récupérer les vapeurs dégagées lors des opérations citées ci-dessus en évitant au maximum les fuites vers l'atmosphère.

Il est connu par le brevet US-A-5,183,087 de dégazer un réservoir à carburant muni d'une tubulure de remplissage, d'un clapet de dégazage et de mise à l'air relié à un canister et d'une canalisation de faible diamètre reliant la partie supérieure du réservoir à un guide situé à l'entrée de la tubulure de remplissage et qui a pour fonction de commander le déclenchement de la fermeture de l'amenée de carburant par le pistolet. Ce guide est muni d'un dispositif d'étanchéité et la canalisation aboutit en aval du dispositif d'étanchéité. Dans ce système, le dégazage s'effectue exclusivement par le clapet relié au canister. Ce clapet est normalement fermé en position de repos et ne s'ouvre que sous l'effet d'une certaine pression dans le réservoir.

Les systèmes connus présentent toutefois un certain nombre de désavantages :
- maîtrise difficile de la surpression dans le réservoir occasionnant des débordements et des projections intempestives au remplissage,
- système mal adapté à la récupération des vapeurs par le pistolet,
- impossibilité de déclencher la fermeture de l'alimentation en carburant par le pistolet pour un sur-remplissage inférieur à 0,21.

L'invention a pour but de remédier aux inconvénients des systèmes connus et de fournir un système qui permette :
- le remplissage sans pression dans le réservoir,
- la suppression des débordements et projections de carburant,
- la standardisation du haut de la tubulure de remplissage pour les différentes variantes de carburant et de mode de récupération des vapeurs,
- l'encombrement réduit du système,
- la suppression des clapets anti-refoulement et d'interdiction de sur-remplissage,
- la suppression de la génération d'une bouffée de vapeurs lors de la mise à l'air via l'élimination des systèmes de valves à bille dense,
- le maintien d'un coût bas du même ordre de grandeur ou inférieur à celui des systèmes classiques existant à l'heure actuelle.

A cet effet l'invention concerne un système de sécurité pour réservoir à carburant liquide selon la revendication 1, comprenant :
a) une tubulure de remplissage montée sur ce réservoir et munie, à son orifice d'entrée, d'un guide pour pistolet muni d'un dispositif d'étanchéité vis-à-vis de l'environnement extérieur,
b) un clapet à flotteur, qui est un dispositif mobile coulissant dans un fût, qui suit le niveau de carburant présent dans le réservoir dès que ce niveau atteint la position de repos basse du flotteur dans le fût, ledit clapet étant monté sur le réservoir, capable d'assurer le dégazage lors d'une opération de remplissage de ce réservoir en carburant, de même que sa mise à l'air durant les périodes d'usage normal du réservoir, étant normalement ouvert pendant le remplissage du réservoir comme pendant les périodes d'usage normal du réservoir et ayant une ligne de flottaison réglée pour que le clapet ne soit fermé qu'en deux circonstances, à savoir lorsque le réservoir est incliné au-delà d'une limite prédéterminée, voire complètement retourné et pendant un mouvement transitoire du carburant dont l'ampleur dépasse une valeur prédéterminée
c) une canalisation de respiration des vapeurs et de fixation du niveau maximum du liquide dans le réservoir lors du remplissage, qui possède un diamètre suffisant pour permettre l'échappement des gaz sans créer de surpression substantielle à l'intérieur du réservoir et qui plonge dans la partie haute de ce dernier, reliant cette partie haute à la partie supérieure de la tubulure de remplissage, en aval du dispositif d'étanchéité, du côté du réservoir.

Des modes de réalisation préférés sont donnés par les revendications dépendantes.

L'invention s'adresse à un système de sécurité pour un réservoir à carburant, c'est-à-dire un système qui permette le stockage et la manipulation du carburant de manière sûre pour l'utilisateur comme pour l'environnement. Un tel système met l'utilisateur à l'abri de toute situation hasardeuse, en particulier les risques d'explosion, d'implosion, de combustion ou de pollution quelconques, tout en maintenant l'environnement extérieur exempt de toute fuite de liquide ou émanation de gaz indésirables.

Le réservoir auquel s'adresse le système selon l'invention est constitué d'une enceinte fermée, de formes diverses, généralement étanche vis-à-vis de l'extérieur et peut être équipé de divers accessoires internes ou traversant la paroi de l'enceinte. Le réservoir peut contenir tout type de carburant liquide. En particulier, il peut contenir du carburant pour l'alimentation de moteurs thermiques automobiles et, en particulier, l'essence et le gasoil. Par extension, il peut aussi contenir tout liquide organique qui serait utilisé comme carburant et/ou comburant pour l'alimentation d'une pile à combustible destinée à générer un courant électrique en vue d'alimenter un ou plusieurs moteurs consommant ce type d'énergie.

Le système selon l'invention peut être réalisé en tout matériau approprié utilisé pour réaliser un système à carburant liquide. Des exemples de ces matériaux sont les métaux divers et les matières plastiques. Un système selon l'invention peut aussi comprendre plus d'un matériau particulier.

De préférence, le système de sécurité selon l'invention est réalisé en matière plastique. Par matière plastique on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.*

Les polyhalogénures de vinyle et les polyoléfines sont généralement préférés.

Un polymère souvent employé est le polyéthylène. D'excellents résultats ont été obtenus avec du polyéthylène haute densité (PEHD).

La tubulure de remplissage du système selon l'invention a pour fonction de permettre le remplissage du réservoir, sans fuites de liquide, à partir d'un point qui ne se trouve pas à proximité immédiate du réservoir. Il est par exemple courant, dans le cas d'automobiles personnelles, que le réservoir à carburant soit situé à un endroit peu accessible et relié par une tubulure de remplissage à un orifice obturable par un bouchon situé à un endroit aisément accessible de la carrosserie du véhicule.

Selon l'invention, la tubulure de remplissage est munie, à son orifice d'entrée, d'un guide pour pistolet muni d'un dispositif d'étanchéité vis-à-vis de l'environnement extérieur.

Le pistolet est celui qui équipe les pompes des stations-service destinées à l'approvisionnement en carburant, notamment des véhicules automobiles.

Selon l'invention, le guide est muni d'un dispositif d'étanchéité vis-à-vis de l'environnement extérieur. Ce dispositif d'étanchéité est capable d'isoler l'atmosphère intérieure du réservoir et celle de la tubulure de remplissage de l'atmosphère ambiante, même lorsque le pistolet est introduit dans la tubulure et traverse ledit guide. Par le terme "isoler", on entend désigner ici : admettre une fuite légère de l'ordre de 12 1/heure sous une surpression de 40 mbar par rapport à la pression atmosphérique lorsque le pistolet est introduit dans le guide et, en tout cas inférieure à 20 1/heure sous la même pression.

L'opération de remplissage d'un réservoir avec un carburant liquide s'accompagne nécessairement d'une augmentation de la pression interne au réservoir. Lorsque celui-ci comporte un circuit de dégazage, la légère surpression causée par le liquide nouvellement introduit dans le réservoir tend à s'annuler grâce à l'échappement d'un volume semblable du gaz qui occupait le réservoir. Dans le cas de liquides volatils, le gaz qui s'échappe sera un mélange plus ou moins homogène du gaz présent dans le réservoir avant le remplissage et de vapeurs provenant de la vaporisation partielle du liquide introduit.

Par ailleurs, en utilisation normale du réservoir, le volume de carburant liquide diminue à mesure que des prélèvements plus ou moins réguliers et/ou continus sont effectués. Il est donc nécessaire de prévoir et d'équiper les réservoirs de dispositifs permettant l'entrée d'air afin de compenser la perte de liquide au cours du fonctionnement et d'éviter ainsi la mise en dépression du réservoir et les dangers inhérents à cette situation.

Pour tendre à se prémunir de tels risques, le rôle du clapet de sécurité monté sur un réservoir est d'assurer la mise à l'air du réservoir, en d'autres termes, permettre son ouverture programmée afin de réaliser les deux fonctions distinctes de dégazage lors du remplissage du réservoir et de ventilation de celui-ci lors de l'utilisation normale pendant laquelle le carburant qu'il contient est soit consommé, soit abandonné dans le réservoir pendant une certaine période de stockage.

Le système de sécurité pour réservoir à carburant liquide selon l'invention comprend un clapet à flotteur, c'est-à-dire un dispositif mobile coulissant dans un fût, qui suit le niveau de carburant présent dans le réservoir dès que ce niveau atteint la position de repos basse du flotteur dans le fût. Un tel clapet est un dispositif qui, en collaboration avec les autres éléments du système de sécurité, contribue à maintenir le réservoir sur lequel il est monté dans un état sûr pour l'utilisateur, c'est-à-dire à l'abri de toute situation hasardeuse, en particulier les risques d'explosion, d'implosion, de combustion ou de pollution quelconques, tout en maintenant l'environnement extérieur à l'abri de toute fuite de liquide ou émanation de gaz indésirables.

Le système selon l'invention comprend aussi une canalisation de respiration des vapeurs et de fixation du niveau maximum du carburant liquide dans le réservoir lors du remplissage. Cette canalisation traverse la paroi supérieure du réservoir et plonge à l'intérieur de celui-ci, dans sa partie haute, jusqu'à un certain niveau qui correspond au niveau supérieur maximum admis du carburant dans le réservoir plein.

La canalisation de respiration peut traverser la paroi supérieure du réservoir en tout point de la surface supérieure du réservoir. En particulier, elle peut avantageusement traverser cette paroi en un endroit proche ou adjacent au clapet.

La canalisation de respiration relie la partie haute du réservoir à la partie supérieure de la tubulure de remplissage et est capable d'évacuer la plus grande partie du volume des gaz présents dans le réservoir, c'est-à-dire possède un diamètre suffisant pour permettre l'échappement des gaz sans créer de surpression substantielle à l'intérieur du réservoir.

Cette canalisation de respiration aboutit en aval du dispositif d'étanchéité du guide pistolet présent dans le haut de la tubulure de remplissage. Il faut entendre ici le vocable "aval" comme signifiant le côté du dispositif d'étanchéité situé vers le réservoir.

Selon l'invention, le clapet est ouvert, en situation normale, pendant l'opération de remplissage du réservoir comme pendant les périodes d'usage normal de celui-ci, lorsqu'il est fermé et que le carburant est soit consommé, soit abandonné dans le réservoir pour une certaine période de stockage.

La ligne de flottaison du flotteur du clapet est réglée pour que le clapet ne soit fermé qu'en deux circonstances. La première de celle-ci se manifeste lorsque le réservoir est incliné au-delà d'une limite prédéterminée, voire est complètement retourné. La deuxième prévaut pendant un mouvement transitoire du carburant dont l'ampleur dépasse une certaine valeur prédéterminée.

Un exemple de clapet à flotteur qui convient bien pour le système selon l'invention est celui qui comporte une double chambre, l'une comprenant un flotteur et l'autre un volume faisant office de capacité capable de piéger le carburant liquide entraîné par les vapeurs s'échappant du clapet. Un tel clapet est décrit dans la demande de brevet français N° 2000.09286.

Le système de sécurité décrit ci-dessus est adapté aux divers types de situation géographique ainsi que de pistolets rencontrés dans les stations-service qui distribuent le carburant.

Il est bien adapté, par exemple, à la pratique nord-américaine selon laquelle les vapeurs de carburant sont récupérées dans un canister de grand volume rempli de matière absorbant les hydrocarbures.

Il est aussi particulièrement bien adapté à l'enlèvement et la récupération des vapeurs de carburant par les pistolets dits "actifs", c'est-à-dire qui aspirent eux-mêmes les vapeurs pour les stocker et/ou les récupérer en dehors des véhicules comportant le système de sécurité. Ces derniers peuvent se rencontrer principalement en Europe.

Le dispositif d'étanchéité conforme au système de sécurité selon l'invention peut être réalisé en tout matériau susceptible d'assurer une bonne fonction d'étanchéité entre le réservoir et l'atmosphère extérieure, y compris lorsqu'il est traversé par le bec d'un pistolet à carburant. Le terme étanchéité s'entend ici comme acceptant une fuite légère, du même ordre de grandeur que celle décrite *supra* dans la situation où le pistolet est introduit dans le guide.

Une réalisation particulière qui a donné de bons résultats est celle où ce dispositif est réalisé en matériau élastomère souple comportant deux éléments, le premier, du côté amont, étant constitué de plusieurs lèvres circulaires se repliant sur la surface extérieure du tuyau du bec du pistolet et le deuxième, du côté aval, par un obturateur qui peut s'ouvrir sous l'effet de la pression de contact de l'extrémité du bec du pistolet. Un dispositif à deux lèvres circulaires a donné de bons résultats.

Un mode de réalisation possible de l'obturateur est une pièce circulaire aplatie en matériau élastomère fendue en étoile à partir de son centre en un certain nombre de rayons délimitant des lamelles en forme de secteur circulaire assurant néanmoins l'étanchéité aux gaz lorsqu'elles sont en position fermée de repos, l'une contre l'autre. Un obturateur à 4 lamelles en quartiers a donné d'excellents résultats. Le terme "étanchéité" a ici encore la même signification que précédemment.

Dans le cas où le réservoir est destiné au stockage de carburants à volatilité élevée, une première variante du système selon l'invention bien adaptée à des pistolets munis de dispositifs d'aspiration des vapeurs de carburant, une sortie du clapet est reliée, d'une part, à un canister rempli de matière absorbant les vapeurs de carburant et une canalisation de dégazage des vapeurs relie, d'autre part, une deuxième sortie du clapet à la partie supérieure de la tubulure de remplissage, en amont du dispositif d'étanchéité du guide à un endroit proche du dispositif d'aspiration du pistolet. Cette canalisation de dégazage est capable d'évacuer la plus grande partie du volume des gaz qui s'échappent du réservoir lors d'une opération de remplissage de ce dernier. Un tel type de pistolet aspirant les vapeurs est également appelé pistolet "actif". Ce système est en particulier avantageux lorsque le pistolet actif est du type muni d'un dispositif d'aspiration à manchon capable d'entourer l'orifice supérieur de la tubulure par lequel s'effectue le remplissage. Ce type de pistolet peut se rencontrer plus souvent en Europe qu'en Amérique du Nord.

Par carburant à volatilité élevée, on entend désigner des carburants légers tels que les essences de diverses qualités, à l'exclusion des huiles plus lourdes telles que le gasoil ou autre carburant pour moteurs Diesel.

Les sorties du clapet dont il est question sont, d'une part, la sortie des gaz du circuit de mise à l'air durant les périodes de fonctionnement normal et, d'autre part, la sortie des gaz du circuit de dégazage lors du remplissage. Cette dernière peut, par exemple être située à la sortie des gaz de la capacité piégeant les entraînements de carburant liquide, lorsqu'une telle capacité est installée dans le clapet utilisé.

L'expression "capable d'évacuer la plus grande partie des gaz" a le même sens que celle explicitée plus haut pour la canalisation de respiration.

Dans le cas de carburants liquides à volatilité élevée et de pistolets démunis de système d'aspiration des vapeurs de carburant, une deuxième variante du système comprend un clapet qui est aussi relié à un canister rempli de matière absorbant les vapeurs de carburant. Mais, dans ce cas particulier, le volume du canister, la taille du clapet et le diamètre de la canalisation reliant le clapet au canister sont dimensionnés pour que ce dernier soit capable d'évacuer à lui seul la plus grande partie du volume des gaz qui s'échappent du réservoir lors de l'opération de remplissage. Dans ce cas, en plus de l'absorption des gaz lors de la mise à l'air du réservoir en utilisation normale, le canister assure aussi l'absorption des gaz quittant le réservoir au moment du remplissage. Cette situation peut se rencontrer principalement en Amérique du Nord.

Une troisième variante du système selon l'invention adaptée aux carburants à faible volatilité comprend un clapet dont la sortie débouche dans un canister rempli de matière absorbant les vapeurs de carburant. Dans ce cas, la sortie du clapet est généralement unique. Ce système peut se rencontrer tant en Europe qu'en Amérique du Nord.

Dans le cas de carburants à faible volatilité, une quatrième variante, alternative à la troisième variante, consiste en ce que la sortie du clapet débouche à l'atmosphère, sans passer par un canister. Cette variante est plus particulièrement adaptée aux systèmes européens. La sortie vers l'atmosphère peut être directe sur le clapet même. Elle peut aussi se faire au travers d'un dispositif empêchant l'introduction de particules solides dans le réservoir ou par tout autre dispositif approprié tel qu'une canalisation ou un circuit d'évacuation quelconque.

Selon une cinquième variante du système selon l'invention, conforme aux troisième et quatrième variantes, une canalisation de dégazage des vapeurs relie une deuxième sortie du clapet à la partie supérieure de la tubulure de remplissage, en amont du dispositif d'étanchéité du guide, à un endroit proche d'un dispositif d'aspiration du pistolet, et est capable d'évacuer la plus grande partie du volume des gaz qui s'échappent du réservoir lors d'une opération de remplissage de ce dernier.

Les significations des termes "étanchéité", "amont" et de l'expression "capable d'évacuer la plus grande partie du volume des gaz qui s'échappent du réservoir" sont encore ici les mêmes que celles explicitées plus haut.

Un système alternatif conforme à chacune des cinq variantes détaillées *supra* consiste encore à ce que la canalisation de dégazage serve aussi à l'introduction de carburant dans le réservoir. Dans ce cas de figure, cette canalisation prolonge la tubulure de remplissage. Elle peut pénétrer dans le réservoir en tout point de sa surface supérieure. De préférence, elle pénètre dans le réservoir par la même ouverture de la paroi de ce dernier qu'un module de pompe et/ou de jauge.

Les canalisations de respiration et/ou de dégazage présentent généralement une forme introduisant un siphon entre le réservoir et la tête de la tubulure de remplissage. En option, lorsque la nécessité s'en fait sentir, par exemple pour des motifs d'emplacement exigu, le système selon l'invention peut aussi comprendre des canalisations de respiration et/ou de dégazage qui ne comportent pas de siphon.

L'invention concerne aussi un réservoir à carburant liquide pour véhicule qui est équipé d'un système conforme à l'une quelconque des formes de réalisation détaillées ci-dessus.

Enfin, l'invention s'adresse aussi à un bouchon de tubulure de remplissage d'un système conforme aux variantes qui comportent une canalisation de dégazage reliée à la partie supérieure de la tubulure de remplissage, en amont du dispositif d'étanchéité, dont la caractéristique est de comporter à son extrémité intérieure à la tubulure une saillie circulaire capable, lorsque ce bouchon se trouve en position fermée, d'obturer la lèvre du joint souple la plus en amont et d'isoler de manière étanche la canalisation de dégazage de l'ensemble formé par la tubulure de remplissage et la première canalisation de respiration des vapeurs. L'étanchéité s'entend ici tant pour les vapeurs que pour du carburant liquide.

Les figures 1 à 4 qui suivent ont pour but d'illustrer l'invention, sans en limiter en aucune façon sa portée.
La figure 1 illustre schématiquement un système de sécurité pour réservoir à carburant liquide dans une version convenant pour les pays européens.
La figure 2 décrit schématiquement un système de sécurité pour réservoir à carburant liquide dans une version convenant pour l'Amérique du Nord.
La figure 3 illustre le plan en coupe d'un pistolet dont le bec a été correctement introduit dans un dispositif d'étanchéité d'une tubulure.
La figure 4 représente une coupe dans un ensemble tubulure - guide - bouchon en position fermée.

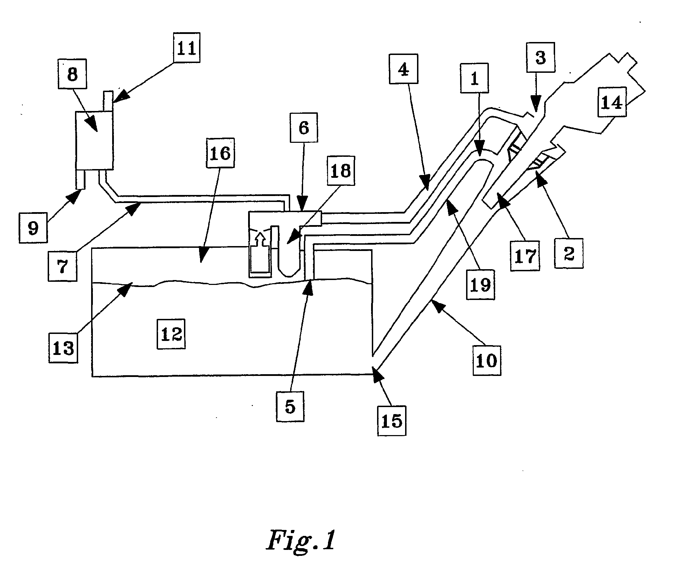

Dans la figure 1, un réservoir (12) en polyéthylène haute densité, contenant du carburant liquide était muni d'une tubulure de remplissage (10), d'un clapet de dégazage et de mise à l'air (6), comportant une capacité de piégeage de liquide (18), relié par la canalisation (7) à un canister (8) rempli de charbon actif et par une canalisation de dégazage (4) à l'orifice supérieur (3) de la tubulure de remplissage (10). Une canalisation de respiration (19) des vapeurs reliait le ciel du réservoir (12) à une zone (1) de la tubulure (10) située immédiatement en aval du dispositif d'étanchéité (2). Ce dispositif d'étanchéité (2) comportait un joint souple. La canalisation de respiration (19) pénétrait le réservoir par le même orifice que celui pratiqué dans la paroi de celui-ci pour le clapet (6) et plongeait dans le ciel du réservoir (12) jusqu'à un niveau (5) qui fixait le niveau maximum de carburant liquide admis dans le réservoir. La figure 1 montre aussi un pistolet de station-service (14) distribuant du carburant, engagé dans le haut de la tubulure (10) et traversant le dispositif d'étanchéité (2) de manière telle que l'extrémité (17) du bec distributeur soit situé en aval du joint d'étanchéité (2).

Le fonctionnement du système représenté à la figure 1 se détaille comme suit. Partant de la situation initiale dans laquelle le réservoir (12) était fermé par un bouchon d'obturation (non représenté) de la tubulure de remplissage (10) et le réservoir en situation normale de repos, aucune quantité de carburant n'étant prélevée, on a ouvert le bouchon obturant l'entrée (3) de la tubulure de remplissage (10), afin d'effectuer une opération de ravitaillement en essence.

On a introduit alors le pistolet (14) dans l'entrée (3) de la tubulure (10) et on l'a forcé mécaniquement à pénétrer dans les joints du dispositif d'étanchéité (2) et à ouvrir et traverser l'obturateur situé à la partie aval de ce dispositif. Ce pistolet (14) portait à l'extrémité de son bec (17), introduit dans la tubulure (10) en aval du joint du dispositif d'étanchéité (2), un orifice d'entrée servant de capteur de déclenchement de la coupure de l'arrivée de carburant. Grâce aux joints du dispositif d'étanchéité (2), l'air ambiant ne pouvait plus accéder à l'orifice du système de déclenchement du pistolet (14). L'obturateur a été ouvert par le bec (17) qui a forcé l'ouverture de la paroi découpée en forme de croix empêchant le remplissage lorsqu'elle se trouvait en position fermée. Cette disposition de l'obturateur a permis de forcer l'obtention d'une bonne position du pistolet (14) de manière à délivrer le carburant dans le réservoir (12) et à positionner le bec (17) du pistolet (14) en aval du dispositif d'étanchéité (2).

La commande d'ouverture du pistolet (14) placé correctement dans la tubulure (10) a été ensuite manoeuvrée par l'utilisateur et de l'essence a commencé à être délivrée dans le réservoir (12). De manière à ce que le pistolet (14) ne déclenche pas et ne provoque pas l'arrêt de l'arrivée d'essence, de l'air et/ou des vapeurs d'essence s'échappaient par la canalisation de respiration (19), la partie de canalisation plongeant dans le réservoir jusqu'au niveau (5), la poche gazeuse (16), le clapet (6), la canalisation de dégazage (4) et l'atmosphère proche de l'entrée (3).

Dans le même temps, le volume d'essence introduit par la tubulure (10) a remplacé le volume de gaz présent dans la poche (16) du réservoir (12). Ce volume de gaz s'est échappé comme expliqué ci-dessus par le clapet (6) et la canalisation de dégazage (4).

Au départ de la canalisation (7) du clapet (6), se trouvait un dispositif venturi qui a introduit une certaine perte de charge dans la liaison du clapet (6) avec le canister (8), de manière à ne laisser passer vers le canister qu'une petite quantité de gaz, nettement moins importante que celle qui circule dans les canalisations (19) et (4). Cette disposition a permis de ne pas saturer inutilement le charbon actif remplissant le canister (8) pendant l'opération de remplissage.

Pendant le remplissage, la surpression régnant dans le réservoir (12) par rapport à la pression atmosphérique est restée très faible et uniquement déterminée par les caractéristiques de faible perte de charge des passages ouverts du clapet (6) et de la canalisation de dégazage (4).

Les gaz sortant à l'atmosphère à l'entrée (3) de la tubulure ont été aspirés au moyen d'un système actif comportant un manchon (non représenté) entourant le haut du pistolet (14) et l'entrée (3) et raccordé à une pompe d'aspiration de la station-service où les gaz ont été récupérés.

Le niveau d'essence (13) dans le réservoir s'est élevé et a fini par affleurer à l'orifice de la canalisation de respiration (19), à hauteur du niveau (5). A ce moment, le pistolet (14) n'a plus reçu d'air ou de gaz en provenance de la poche (16) et l'orifice d'entrée du bec (17) a été soumis à une légère dépression, ce qui a provoqué par le fait même l'activation du dispositif automatique du pistolet (14) sensible à la dépression et le déclenchement de la coupure d'arrivée d'essence.

Le clapet (6) étant resté ouvert, la très légère surpression présente dans le réservoir pendant le remplissage s'est équilibrée avec la pression atmosphérique via la canalisation de dégazage (4) et la sortie (3). Après fermeture du bouchon d'obturation de l'orifice de la tubulure (10), l'équilibrage de pression dans le réservoir s'est poursuivie par la canalisation (7) et le canister (8).

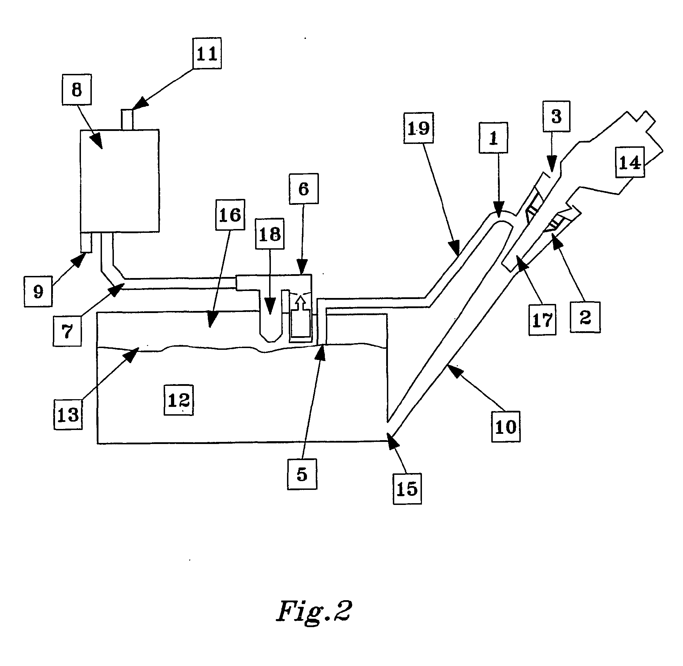

La figure 2 décrit schématiquement un système de sécurité pour réservoir à carburant liquide dans une version convenant pour l'Amérique du Nord.

Dans cette figure, un réservoir (12) en polyéthylène haute densité, contenant du carburant liquide était muni d'une tubulure de remplissage (10), d'un clapet de dégazage et de mise à l'air (6), comportant une capacité de piégeage de liquide (18), relié par la canalisation (7) à un canister de grande dimension (8) rempli de charbon actif. Une canalisation de respiration (19) des vapeurs relie le ciel du réservoir (12) à une zone (1) de la tubulure (10) située immédiatement en aval du dispositif d'étanchéité (2) Ce dispositif d'étanchéité (2) comportait un joint souple. La canalisation de respiration (19) pénétrait le réservoir par le même orifice que celui pratiqué dans la paroi de celui-ci pour le clapet (6) et plongeait dans le ciel du réservoir (12) jusqu'à un niveau (5) qui fixait le niveau maximum de carburant liquide admis dans le réservoir. La figure 2 montre aussi un pistolet de station-service (14) distribuant du carburant, engagé dans le haut de la tubulure (10) et traversant le dispositif d'étanchéité (2) de manière telle que l'extrémité (17) du bec distributeur soit situé en aval du joint d'étanchéité (2). Ce bec (17) était percé d'ouvertures(non représentées) reliées à un dispositif d'aspiration externe des vapeurs de carburant.

Le fonctionnement du système de sécurité de la figure 2 se détaille comme suit. Partant de la situation initiale dans laquelle le réservoir (12) était fermé par un bouchon d'obturation de la tubulure de remplissage (10) et le réservoir en situation normale de repos, aucune quantité de carburant n'étant prélevée, on a ouvert le bouchon obturant l'entrée (3) de la tubulure de remplissage (10), afin d'effectuer une opération de ravitaillement en essence.

On a introduit alors le pistolet (14) dans l'entrée (3) de la tubulure (10) et on l'a forcé mécaniquement à pénétrer dans les joints du dispositif d'étanchéité (2) et à ouvrir et traverser l'obturateur situé à la partie aval de ce dispositif. Ce pistolet (14) portait à l'extrémité de son bec (17), introduit dans la tubulure (10) en aval du joint du dispositif d'étanchéité (2), un orifice d'entrée servant de capteur de déclenchement de la coupure de l'arrivée de carburant. Grâce aux joints du dispositif d'étanchéité (2), l'air ambiant ne pouvait plus accéder à l'orifice du système de déclenchement du pistolet (14). L'obturateur a été ouvert par le bec (17) qui a forcé l'ouverture de la paroi découpée en forme de croix empêchant le remplissage lorsqu'elle se trouvait en position fermée. Cette disposition de l'obturateur a permis de forcer l'obtention d'une bonne position du pistolet (14) de manière à délivrer le carburant dans le réservoir (12) et à positionner le bec (17) du pistolet (14) en aval du dispositif d'étanchéité (2).

La commande d'ouverture du pistolet (14) placé correctement dans la tubulure (10) a été ensuite manoeuvrée par l'utilisateur et de l'essence a commencé à être délivrée dans le réservoir (12). De manière à ce que le pistolet (14) ne déclenche pas et ne provoque pas l'arrêt de l'arrivée d'essence, de l'air et/ou des vapeurs d'essence s'échappaient par la canalisation de respiration (19), la partie de canalisation plongeant dans le réservoir jusqu'au niveau (5), la poche gazeuse (16), le clapet (6), la canalisation (7), le canister (8) et la sortie à l'atmosphère (11).

Dans le même temps, le volume d'essence introduit par la tubulure (10) a remplacé le volume de gaz présent dans la poche (16) du réservoir (12). Ce volume de gaz s'est échappé comme expliqué ci-dessus par le clapet (6) et le canister (8).

Pendant le remplissage, la surpression régnant dans le réservoir (12) par rapport à la pression atmosphérique est restée très faible et uniquement déterminée par les caractéristiques de faible perte de charge des passages ouverts du clapet (6), de la canalisation (7) et du canister (8).

Les vapeurs provenant de la poche (16) ont été évacuées par la canalisation de respiration (19) à partir de l'orifice situé au niveau (5), l'arrivée de la zone (1) et les trous d'aspiration du bec (17) du pistolet (14) (non illustrés).

Le niveau d'essence (13) dans le réservoir s'est élevé et a fini par affleurer à l'orifice de la canalisation de respiration (19), à hauteur du niveau (5). A ce moment, le pistolet (14) n'a plus reçu d'air ou de gaz en provenance de la poche (16) et l'orifice d'entrée du bec (17) a été soumis à une légère dépression, ce qui a provoqué par le fait même l'activation du dispositif automatique du pistolet (14) sensible à la dépression et le déclenchement de la coupure d'arrivée d'essence.

Le clapet (6) étant resté ouvert, la très légère surpression présente dans le réservoir pendant le remplissage s'est équilibrée avec la pression atmosphérique via la canalisation (7), le canister (8) et la sortie (11).

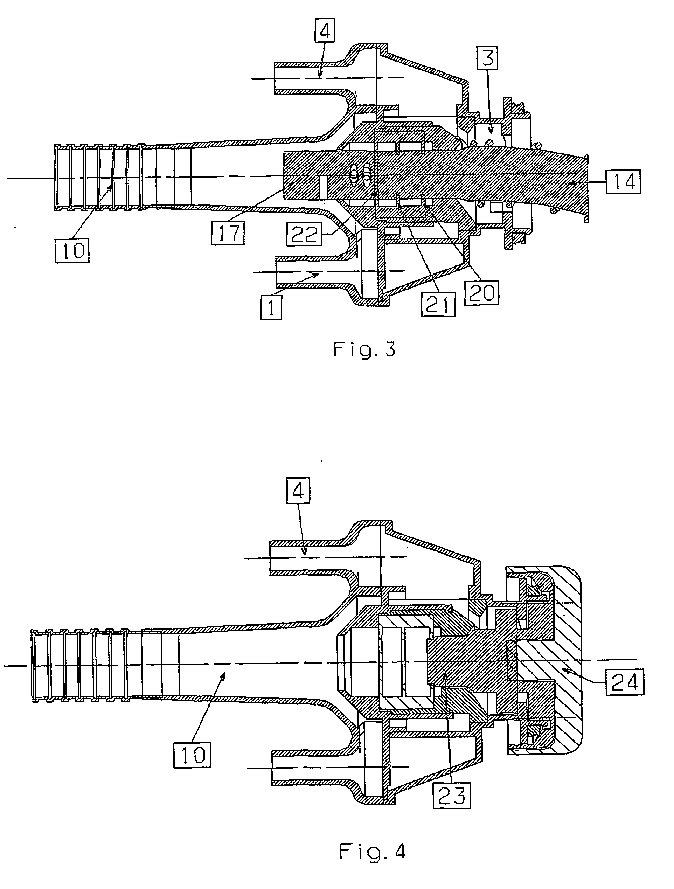

La figure 3 illustre le plan en coupe d'un pistolet (14) dont le bec (17) a été correctement introduit dans un dispositif d'étanchéité (2) d'une tubulure (10). Ce dispositif était muni de 2 joints souples (20) et (21) et d'un obturateur en étoile à 4 quartiers (22). On y distingue aussi l'arrivée (1) de la canalisation de respiration (19) ainsi que l'orifice (3) de la canalisation de dégazage (4).

La figure 4 représente une coupe dans un ensemble tubulure - guide - bouchon en position fermée. On y distingue l'extrémité en saillie (23) du bouchon (24) qui ferme la connexion entre la tubulure de remplissage (10) et la canalisation de dégazage (4).

## Revendications

1. Système de sécurité pour réservoir à carburant liquide (12), comprenant :
a) une tubulure de remplissage (10) montée sur ce réservoir (12) et munie, à son orifice d'entrée, d'un guide pour pistolet (14) muni d'un dispositif d'étanchéité (2) vis-à-vis de l'environnement extérieur,
b) un clapet à flotteur (6) , qui est un dispositif mobile coulissant dans un fût, qui suit le niveau de carburant présent dans le réservoir (12) dès que ce niveau atteint la position de repos basse du flotteur dans le fût, ledit clapet étant monté sur le réservoir (12), capable d'assurer le dégazage lors d'une opération de remplissage de ce réservoir (12) en carburant, de même que sa mise à l'air durant les périodes d'usage normal du réservoir (12), étant normalement ouvert pendant le remplissage du réservoir (12) comme pendant les périodes d'usage normal du réservoir (12) et ayant une ligne de flottaison réglée pour que le clapet (6) ne soit fermé qu'en deux circonstances, à savoir lorsque le réservoir (12) est incliné au-delà d'une limite prédéterminée, voire complètement retourné et pendant un mouvement transitoire du carburant dont l'ampleur dépasse une valeur prédéterminée
c) une canalisation (19) de respiration des vapeurs et de fixation du niveau maximum du liquide dans le réservoir (12) lors du remplissage, qui possède un diamètre suffisant pour permettre l'échappement des gaz sans créer de surpression substantielle à l'intérieur du réservoir et qui plonge dans la partie haute de ce dernier, reliant cette partie haute à la partie supérieure de la tubulure de remplissage (10), en aval du dispositif d'étanchéité (2), du côté du réservoir (12).

2. Système selon la revendication 1, **caractérisé en ce que** le dispositif d'étanchéité (2) est réalisé en matériau élastomère souple comportant deux éléments, le premier, du côté amont, étant constitué de lèvres circulaires se repliant sur la surface extérieure du tuyau du bec (17) du pistolet (14) et le deuxième, du côté aval, par un obturateur qui peut s'ouvrir sous l'effet de la pression de contact de l'extrémité du bec (17) du pistolet (14).

3. Système selon une quelconque des revendications 1 ou 2, adapté aux carburants liquides à volatilité élevée et aux pistolets (14) munis de dispositifs d'aspiration des vapeurs de carburant, **caractérisé en ce qu'**une sortie du clapet (6) est reliée, d'une part, à un canister (8) rempli de matière absorbant les vapeurs de carburant et **en ce qu'**une canalisation de dégazage (4) des vapeurs relie, d'autre part, une deuxième sortie du clapet (6) à la partie supérieure de la tubulure de remplissage (10), en amont du dispositif d'étanchéité (2) du guide à un endroit proche du dispositif d'aspiration du pistolet, cette canalisation de dégazage (4) étant capable d'évacuer la plus grande partie du volume des gaz qui s'échappent du réservoir (12) lors d'une opération de remplissage de ce dernier.

4. Système selon une quelconque des revendications 1 ou 2, adapté aux carburants liquides à volatilité élevée et aux pistolets (14) démunis de systèmes d'aspiration des vapeurs de carburant, **caractérisé en ce que** le clapet (6) est relié à un canister (8) rempli de matière absorbant les vapeurs de carburant et **en ce que** le volume du canister (8), la taille du clapet (6) et le diamètre de la canalisation (7) reliant le clapet (6) au canister (8) sont dimensionnés pour être capables d'évacuer la plus grande partie du volume des gaz qui s'échappent du réservoir (12) lors de l'opération de remplissage.

5. Système selon une quelconque des revendications 1 ou 2, adapté aux carburants liquides à faible volatilité, **caractérisé en ce que** la sortie du clapet (6) débouche dans un canister (8) rempli de matière absorbant les vapeurs de carburant.

6. Système selon une quelconque des revendications 1 ou 2, adapté aux carburants liquides à faible volatilité, **caractérisé en ce que** la sortie du clapet (6) débouche à l'atmosphère, sans passer par un canister (8).

7. Système selon l'une quelconque des revendications 5 ou 6, **caractérisé en ce qu'**une canalisation de dégazage (4) des vapeurs relie une deuxième sortie du clapet (6) à la partie supérieure de la tubulure de remplissage (10), en amont du dispositif d'étanchéité (2) du guide, à un endroit proche d'un dispositif d'aspiration du pistolet (14), et est capable d'évacuer la plus grande partie du volume des gaz qui s'échappent du réservoir (12) lors d'une opération de remplissage de ce dernier.

8. Système selon une quelconque des revendications 3 à 7, **caractérisé en ce que** la canalisation de dégazage (4) sert aussi à l'introduction de carburant dans le réservoir (12) et pénètre dans le réservoir (12) par la même ouverture de la paroi de ce dernier qu'un module de pompe et/ou de jauge.

9. Réservoir à carburant liquide (12) pour véhicule équipé d'un système conforme à l'une quelconque des revendications 1 à 8.

## Claims

1. Safety system for a liquid fuel tank (12), comprising:
a) a fill tube (10) mounted on this tank (12) and provided, at its inlet orifice, with a nozzle guide (14) provided with a device (2) for sealing with respect to the external environment;
b) a valve (6) with a float, which is a mobile device sliding in a stem, which follows the fuel level inside the tank (12) when said level reaches the low rest position of the float inside the stem, said valve being mounted on the tank (12), capable of ensuring degassing during an operation of filling this tank (12) with fuel, and likewise venting it during periods of normal use of the tank (12), and said valve being normally open while the tank (12) is being filled and also during periods of normal use of the tank (12), the "waterline" of the float being adjusted so that the valve (6) is closed only under two circumstances, namely when the tank (12) is inclined beyond a predetermined limit, or even completely upside down, and during a transient movement of the fuel, the magnitude of which exceeds a predetermined value;
c) a breather pipe (19) for the vapours and for fixing the maximum level of liquid in the tank (12) during filling, which pipe has a diameter sufficient to allow the gases to escape without generating a substantial pressure within the tank (12) and which is immersed in the top part of the tank (12), connecting this top part to the upper part of the fill tube (10), downstream of the sealing device (2), on the tank side.

2. System according to claim 1, **characterized in that** the sealing device (2) is made of a flexible elastomer material having two elements, the first, on the upstream side, consisting of circular lips that bend back onto the outer surface of the pipe (17) of the nozzle spout (14) and the second, on the downstream side, consisting of an obturator that can open under the effect of the pressure when the end (14) of the nozzle spout (14) comes into contact with it.

3. System according to either of Claims 1 and 2, suitable for liquid fuels of high volatility and for nozzles (14) that are provided with fuel vapour suction devices, **characterized in that** one outlet of the valve (6) is connected, on the one hand, to a canister (8) filled with a material that absorbs the fuel vapours and **in that** a vapour degassing pipe (4) connects, on the other hand, a second outlet of the valve (6) to the upper part of the fill tube (10), upstream of the sealing device (2) of the guide at a point close to the suction device of the nozzle, this degassing pipe (4) being capable of removing most of the volume of gases that escape from the tank (12) during an operation of filling the latter.

4. System according to either of Claims 1 and 2, suitable for liquid fuels of high volatility and for nozzles (14) that are not provided with fuel vapour suction systems, **characterized in that** the valve (6) is connected to a canister (8) filled with a material that absorbs the fuel vapours and **in that** the volume of the canister (8), the size of the valve (6) and the diameter of the pipe (7) connecting the valve (6) to the canister (8) are dimensioned in order to be able to remove most of the volume of gases that escape from the tank (12) during the filling operation.

5. System according to either of Claims 1 and 2, suitable for liquid fuels of low volatility, **characterized in that** the outlet of the valve (6) runs into a canister (8) filled with a material that absorbs the fuel vapours.

6. System according to either of Claims 1 and 2, suitable for liquid fuels of low volatility, **characterized in that** the outlet of the valve (6) runs into the atmosphere, without passing via a canister (8).

7. System according to Claim 5 or 6, **characterized in that** a vapour degassing pipe (4) connects a second outlet of the valve (6) to the upper part of the fill tube (10), upstream of the sealing device (2) of the guide, at a point close to a suction device of the nozzle (14), and is capable of removing most of the volume of gases that escape from the tank (12) during an operation of filling the latter.

8. System according to any one of Claims 3 to 7, **characterized in that** the degassing pipe (4) also serves for introducing fuel into the tank (12) and penetrates the tank (12) via the same opening in the wall of the latter as a pump and/or gauge module.

9. Liquid fuel tank (12) for a vehicle equipped with a system according to any one of Claims 1 to 8.

## Patentansprüche

1. Sicherheitssystem für Tank (12) für flüssigen Kraftstoff, mit Folgendem:
a) einem an diesem Tank (12) angebrachten Füllrohr (10), das an seiner Eingangsöffnung mit einer Führung für eine Pistole (14) versehen ist, die mit einer Dichtungsvorrichtung (2) gegenüber der äußeren Umgebung versehen ist,
b) einem Schwimmerventil (6), das eine in einem Hohlkörper gleitende bewegliche Vorrichtung ist und das dem im Tank (12) vorhandenen Kraftstoffpegel folgt, sobald dieser Pegel die untere Ruheposition des Schwimmers in dem Hohlkörper erreicht, wobei das Ventil an dem Tank (12) angebracht ist, bei einem Füllvorgang dieses Tanks (12) mit Kraftstoff das Entgasen sowie sein Entlüften bei Perioden normaler Verwendung des Tanks (12) gewährleisten kann, beim Füllen des Tanks (12) sowie während Perioden normaler Verwendung des Tanks (12) normalerweise geöffnet ist und eine eingestellte Wasserlinie aufweist, damit das Ventil (6) nur unter zwei Bedingungen geschlossen wird, nämlich wenn der Tank (12) über eine vorbestimmte Grenze hinaus geneigt ist oder sogar vollständig umgedreht ist, und während einer Übergangsbewegung des Kraftstoffes, deren Ausmaß einen vorbestimmten Wert überschreitet;
c) einer Leitung (19) zur Entlüftung der Dämpfe und zum Festlegen des maximalen Flüssigkeitspegels im Tank (12) beim Füllen, die einen ausreichend großen Durchmesser aufweist, um die Evakuierung der Gase zu gestatten, ohne einen wesentlichen Überdruck im Inneren des Tanks zu erzeugen, und die im oberen Teil dieses Letzteren eingetaucht ist und diesen oberen Teil stromabwärts der Dichtungsvorrichtung (2) auf der Seite des Tanks (12) mit dem Oberteil des Füllrohrs (10) verbindet.

2. System nach Anspruch 1, **dadurch gekennzeichnet, dass** die Dichtungsvorrichtung (2) aus einem flexiblen elastomeren Material hergestellt ist, das zwei Elemente enthält, wobei das erste auf der stromaufwärtigen Seite aus kreisförmigen Lippen besteht, die auf die Außenseite des Rohrmundstücks (17) der Pistole (14) umgeklappt sind, und das zweite auf der stromabwärtigen Seite aus einem Verschluss besteht, der unter der Wirkung des Kontaktdrucks des Endes des Mundstücks (17) der Pistole (14) geöffnet werden kann.

3. System nach einem der Ansprüche 1 oder 2, das für flüssige Kraftstoffe mit hoher Flüchtigkeit und für Pistolen (14), die mit Vorrichtungen zum Ansaugen von Kraftstoffdämpfen versehen sind, geeignet ist, **dadurch gekennzeichnet, dass** ein Auslass des Ventils (6) einerseits mit einem Behälter (8) verbunden ist, der mit einem die Kraftstoffdämpfe absorbierenden Material gefüllt ist, und dass eine Leitung (4) zur Entlüftung der Dämpfe anderseits einen zweiten Auslass des Ventils (6) stromaufwärts der Dichtungsvorrichtung (2) der Führung an einer Stelle nahe der Saugvorrichtung der Pistole mit dem Oberteil des Füllrohrs (10) verbindet, wobei diese Entlüftungsleitung (4) den Großteil des Volumens der Gase, die bei einem Füllvorgang des Tanks (12) aus dem Tank (12) entweichen, ablassen kann.

4. System nach einem der Ansprüche 1 oder 2, das für flüssige Kraftstoffe mit hoher Flüchtigkeit und für Pistolen (14), die nicht mit Vorrichtungen zum Ansaugen von Kraftstoffdämpfen versehen sind, geeignet ist, **dadurch gekennzeichnet, dass** das Ventil (6) mit einem Behälter (8) verbunden ist, der mit einem die Kraftstoffdämpfe absorbierenden Material gefüllt ist, und dass das Volumen des Behälters (8), die Größe des Ventils (6) und der Durchmesser der Leitung (7), die das Ventil (6) mit dem Behälter (8) verbindet, so bemessen sind, dass der Großteil des Volumens der Gase, die bei einem Füllvorgang aus dem Tank (12) entweichen, abgelassen werden kann.

5. System nach einem der Ansprüche 1 oder 2, das für flüssige Kraftstoffe mit geringer Flüchtigkeit geeignet ist, **dadurch gekennzeichnet, dass** der Auslass des Ventils (6) in einem Behälter (8) mündet, der mit Material gefüllt ist, das die Kraftstoffdämpfe absorbiert.

6. System nach einem der Ansprüche 1 oder 2, das für flüssige Kraftstoffe mit geringer Flüchtigkeit geeignet ist, **dadurch gekennzeichnet, dass** der Auslass des Ventils (6) in der Atmosphäre mündet, ohne durch einen Behälter (8) zu passieren.

7. System nach einem der Ansprüche 5 oder 6, **dadurch gekennzeichnet, dass** eine Leitung (4) zur Entlüftung der Dämpfe einen zweiten Auslass des Ventils (6) stromaufwärts der Dichtungsvorrichtung (2) der Führung an einer Stelle nahe einer Ansaugvorrichtung der Pistole (14) mit dem Oberteil des Füllrohrs (10) verbindet und den Großteil des Volumens der Gase, die beim Füllvorgang des Tanks (12) aus dem Tank (12) entweichen, ablassen kann.

8. System nach einem der Ansprüche 3 bis 7, **dadurch gekennzeichnet, dass** die Entlüftungsleitung (4) des Weiteren dem Einleiten des Kraftstoffes in den Tank (12) dient und durch die gleiche Öffnung in der Wand des Tanks wie ein Pump- und/oder Anzeigemodul in den Tank (12) eintritt.

9. Tank (12) für flüssige Kraftstoffe für ein mit einem System nach einem der Ansprüche 1 bis 8 ausgestattetes Fahrzeug.
